# FASCICULE DE BREVET EUROPEEN

(11) **EP 3 611 496 B1**
(45) Date de publication et mention de la délivrance du brevet: **15.10.2025**
(21) Numéro de dépôt: 18306122.5
(22) Date de dépôt: 16.08.2018
(51) Int. Cl.: G01N 21/88

(54) **PROCÉDÉ DE CONTRÔLE D'UN CORDON DE JOINTURE D'UNE PIÈCE INDUSTRIELLE ET SYSTÈME POUR METTRE EN OEUVRE LEDIT PROCÉDÉ**
KONTROLLVERFAHREN EINES FUGENBANDS EINES INDUSTRIELLEN WERKSTÜCKS, UND SYSTEM ZUR UMSETZUNG DIESES VERFAHRENS
METHOD FOR INSPECTING A JOINING SEAM OF AN INDUSTRIAL PART AND SYSTEM FOR IMPLEMENTING SAID METHOD

(43) Date de publication de la demande: 19.02.2020
(73) Titulaire: Eiffage Energie Systemes - Clemessy, 68200 Mulhouse (FR)
(72) Inventeur: BRUAT, Christian, 68700 Steinbach (FR); BEDNARSKI, Pascal, 68700 CERNAY (FR)
(74) Mandataire: Renard, Alexis

(56) Documents cités:
- EP-A1- 0 108 599
- FR-A1- 2 817 618
- US-A- 4 812 614
- US-A1- 2018 015 571

## Description

### Domaine technique

La présente invention se rapporte au domaine technique général de la fabrication et/ou de l'assemblage de pièces industrielles.

L'invention concerne plus particulièrement le contrôle du dépôt d'un joint de matière dans le cadre d'un procédé de fabrication d'assemblages industriels. Un tel dépôt de matière par exemple sous forme de cordon permet de réaliser à la jointure de deux pièces une étanchéité et/ou une liaison mécanique entre lesdites pièces. Il est donc impératif de disposer ces cordons de matière à des endroits précis sur une pièce et ce de manière répétitive. Il est important effectivement d'obtenir la même fiabilité dans l'étanchéité ou dans l'assemblage pour un ensemble de pièces fabriquées en série.

L'invention concerne donc plus particulièrement le contrôle des cordons de matières une fois déposées sur la pièce. Il s'agit en l'occurrence de dépôts de joints de matières lissés ou non lissés.

L'invention trouve donc son application notamment dans le domaine de l'industrie automobile et plus précisément dans l'assemblage de pièces de carrosserie d'un véhicule. D'autres applications dans d'autres domaines techniques tels que l'aéronautique, l'industrie navale ou autre sont également concernés par la présente invention.

Le terme « pièce » doit être compris au sens large, c'est-à-dire englobant une pièce simple, un assemblage de pièces ou par exemple une carrosserie de véhicule ou une partie de carrosserie.

On connaît par exemple par l'intermédiaire du document FR 2741438 un dispositif et un procédé de contrôle dimensionnel d'un cordon de matière déposé sur un support. Le procédé décrit dans ce document se base sur l'utilisation d'une caméra et d'un logiciel adéquat pour détecter des défauts dimensionnels du cordon. Le procédé et le dispositif décrits permettent à la fois de déposer le cordon et de contrôler visuellement ses dimensions lors de la même opération. La mise en œuvre d'un tel procédé est relativement complexe et présente un certain nombre d'inconvénients. Le document FR 2817618 divulgue un autre dispositif et procédé de contrôle de paramètres physiques se rapportant à un cordon de matière déposé sur une pièce industrielle.

En effet le fait de procéder simultanément au dépôt du cordon et à son contrôle dimensionnel, diminue substantiellement les performances du dispositif de contrôle. La caméra doit suivre le mouvement du dispositif permettant de déposer le cordon ce qui, dans un certain nombre de cas, ne la met pas dans une position idéale pour contrôler visuellement la qualité du cordon. La vitesse de déplacement de la caméra est également limitée par la vitesse de déplacement du dispositif permettant de déposer le cordon. En outre, l'outil permettant d'effectuer ces manipulations devient très complexe à réaliser.

L'objet de la présente invention vise par conséquent à proposer un nouveau procédé de contrôle palliant les inconvénients de l'art antérieur et s'affranchissant par conséquent de toutes les contraintes liées aux opérations de pose d'un cordon sur un support.

Un autre objet de la présente invention vise à fournir un nouveau système de contrôle permettant de mettre en œuvre le procédé de contrôle et dont la fiabilité est améliorée.

Les objets assignés à la présente invention sont atteints à l'aide d'un procédé de contrôle de paramètres physiques se rapportant à au moins un cordon de matière déposé sur une pièce industrielle selon la revendication 1.

Dans le cadre de l'invention, le cordon de matière déposé sur la pièce peut être lissé ou non lissé.

Selon un exemple de mise en œuvre, le procédé de contrôle consiste à initier des instructions d'actions correctives concernant la pose du cordon et/ou concernant le pilotage du déplacement relatif entre la pièce et la machine de vision.

Selon un exemple de mise en œuvre, le procédé de contrôle consiste à maintenir la pièce comportant le cordon dans une position fixe et à disposer la machine de vision sur la tête d'un bras robotisé dont le déplacement est piloté automatiquement pour faire défiler ledit cordon devant la machine de vision.

Selon un autre exemple de mise en œuvre, le procédé consiste à disposer la pièce comportant le cordon sur un support mobile du genre balancelle, dont le déplacement est piloté automatiquement pour faire défiler ledit cordon devant la machine de vision fixe.

Selon un exemple de mise en œuvre, le procédé consiste à utiliser l'ordinateur de configuration pour définir pour chaque image du cordon, une image se rapportant à un cordon idéal et générer des paramètres correctifs adéquats.

Selon l'invention, le procédé consiste à recaler l'image prise en dynamique par rapport à une image référentielle pour pouvoir analyser la jointure masquée par le cordon et détecter d'éventuels défauts de positionnement dudit cordon par rapport à ladite jointure.

Cette image référentielle est enregistrée dans une base de données de référence, laquelle est construite à partir d'un mode d'apprentissage.

Par ailleurs, le procédé de contrôle permet également grâce à un apprentissage continu, par exemple pour une série de pièces théoriquement identiques, de compenser des dérives dimensionnelles des pièces et des dérives dans le déplacement relatif entre les pièces et la machine de vision.

Il convient d'utiliser au moins un repère fixe par zone à contrôler. Ainsi, un assemblage ou ferrage de deus pièces comportera deux zones et nécessitera d'utiliser au moins deux repères fixes, à savoir un sur chaque zone. Un nombre plus grand de repères fixes favorisera la précision du contrôle.

Selon un exemple de mise en œuvre, le procédé de contrôle consiste à utiliser trois repères fixes.

Selon un exemple de mise en œuvre, le procédé de contrôle consiste à déterminer le ou les repères fixes, à déterminer un décalage de la pièce par rapport à une image antérieure de référence en estimant le déplacement des repères fixes par rapport aux repères fixes sur l'image antérieure de référence et repositionner la tracé optimal de la jointure à recouvrir sur la pièce à contrôler.

Selon un exemple de mise en œuvre, le procédé de contrôle consiste à estimer le décalage de la pièce par calcul, en utilisant un algorithme de recalage par triangulation ou un algorithme de recalage par calcul optimal.

Selon un exemple de mise en œuvre, le procédé consiste à définir, pour le cordon, des segments de contrôle, dont chacun est délimité selon son extension longitudinale par deux points d'extrémités, lesdits points d'extrémités étant localisés par rapport à au moins un repère fixe de la pièce, lesdits segments étant contrôlés les uns après les autres avec la machine de vision ou simultanément avec plusieurs machines de vision.

Selon un exemple de mise en œuvre, le procédé de consiste à choisir parmi les paramètres à contrôler, des paramètres de contrôle spécifiques pour chaque segments de cordon.

Selon un exemple de mise en œuvre, le procédé de contrôle consiste à visualiser sur l'outil d'affichage les images du cordon déposé sur la pièce ainsi qu'une matérialisation de la position idéale dudit cordon sur chaque image.

Selon un exemple de mise en œuvre, le procédé de contrôle consiste à utiliser un programme pour l'échange d'informations entre la tête de vision et le bras robotisé et/ou entre la tête de vision et l'ordinateur de configuration.

Selon un exemple de mise en œuvre, le procédé de contrôle est mis en œuvre pour des pièces destinées à l'industrie automobile.

Les objets assignés à la présente invention sont également atteints à l'aide d'un système de contrôle comprenant un système de contrôle d'un cordon de matière déposé sur une pièce selon la revendication 14.

Selon un exemple de réalisation, le système de contrôle comprend une banque de données complémentaire, du genre serveur à distance par exemple pour générer et fournir des données ou instructions correctives.

Selon un exemple de réalisation du système de contrôle, la tête de vision comprend une caméra numérique, un éclairage annulaire localisé autour de la caméra et deux projecteurs disposés à la périphérie de l'éclairage annulaire en présentant un écart angulaire de 90°.

Selon un exemple de réalisation, le système de manutention comprend un bras robotisé portant la tête de vision.

Selon un autre exemple de réalisation, le système de manutention comprend une nacelle mobile sur laquelle est fixée la pièce portant le cordon.

Les objets assignés à la présente invention sont également atteints à l'aide d'un programme d'ordinateur comprenant des instructions de code de programme enregistrées sur un support lisible par ordinateur pour mettre en œuvre les étapes du procédé de contrôle présenté ci-dessus, lorsque ledit programme fonctionne sur un ordinateur.

Le procédé de contrôle conforme à l'invention présente l'énorme avantage de pouvoir mettre en œuvre un apprentissage continu de manière à définir un cordon idéal dans sa forme, dans son esthétique, dans ses dimensions et dans son positionnement.

Un tel apprentissage permet en outre d'affiner les paramètres nécessaires en partant des images lues par la machine de vision pour s'approcher au mieux d'un tel cordon idéal. La nature et l'amplitude des défauts détectés par la machine de vision et les algorithmes de traitement et d'analyse, peuvent permettre ainsi de générer des instructions correctives au fur et à mesure que le nombre de pièces contrôlées augmente.

Un autre avantage du procédé conforme à l'invention réside dans sa capacité à anticiper un certain nombre de dérives par exemple dans le positionnement du cordon lié à une dérive du positionnement de la pièce par rapport à l'outil de dépose dudit cordon. Il est ainsi possible de savoir à l'avance ou plus précisément de quantifier une déviance dimensionnelle ou de position après un nombre déterminé de pièces contrôlées.

Le haut niveau de précision obtenu, grâce aux algorithmes et au logiciel de traitement d'images, permettent donc d'améliorer substantiellement la qualité du contrôle et sa fiabilité. En outre les instructions éventuelles de correction générées et transmises au dispositif de pose de cordon permettent d'améliorer la précision de son positionnement d'une part ainsi que la forme et l'esthétique du cordon, ce qui réduit de manière significative le nombre de pièces défectueuses que l'opérateur ne peut valider et qui doivent par conséquent être reconditionnées.

Un autre avantage du procédé de contrôle conforme à l'invention, réside dans sa souplesse de mise en œuvre. En effet le procédé de contrôle peut être mis en œuvre soit avec une machine de vision constituant la tête d'un bras robotisé, soit avec une machine de vision fixe devant laquelle défile une pièce montée sur une balancelle mobile.

Un autre avantage remarquable du procédé de contrôle conforme à l'invention, réside dans le recalage dynamique de l'image par rapport au véhicule ou de la pièce, ce qui permet de déterminer avec précision et de façon répétée l'emplacement de la jointure entre deux tôles recouvertes par le cordon. En effet, la jointure de la pièce à contrôler est normalement recouverte pat le joint déposé de matière. Cette jointure ne peut donc pas être lue ou repérée par la tête de vision et comme son positionnement peut varier d'une pièce à une autre, c'est grâce au procédé de contrôle conforme à l'invention que l'on détermine de manière précise la position de ladite jointure même non visible sur l'image lue par une caméra. La jointure est alors matérialisée par une ligne sur l'image et la position du cordon de matière par rapport à cette ligne peut alors être évaluée.

Le recalage de l'image permet ainsi de compenser des défauts naturels ou d'usure du système et du robot.

Le procédé et le système de mise en œuvre permettent ainsi de façon remarquable d'atteindre une excellente précision de recalage des images allant jusqu'à un micromètre.

### Brève description des figures

D'autres caractéristiques et avantages de l'invention apparaîtront à la lecture de la description détaillée qui va suivre, description faite en référence aux dessins annexés, illustratifs et non limitatifs, dans lesquels :
- la figure 1 est une représentation schématique illustrant un exemple de réalisation d'un système de contrôle conforme à l'invention,
- la figure 2 est une illustration d'un exemple de réalisation d'un robot comportant une machine de vision d'un système de contrôle conforme à l'invention,
- la figure 3 est une représentation schématique d'un exemple de mise en œuvre du procédé conforme à l'invention, et
- les figures 4 à 6 sont des exemples d'images générées par le système de contrôle conforme à l'invention.

### Exposé détaillé de l'invention

Dans la suite, les éléments représentés sur plusieurs figures, lesquels sont structurellement et fonctionnellement identiques comportent les mêmes références numériques ou alphanumériques.

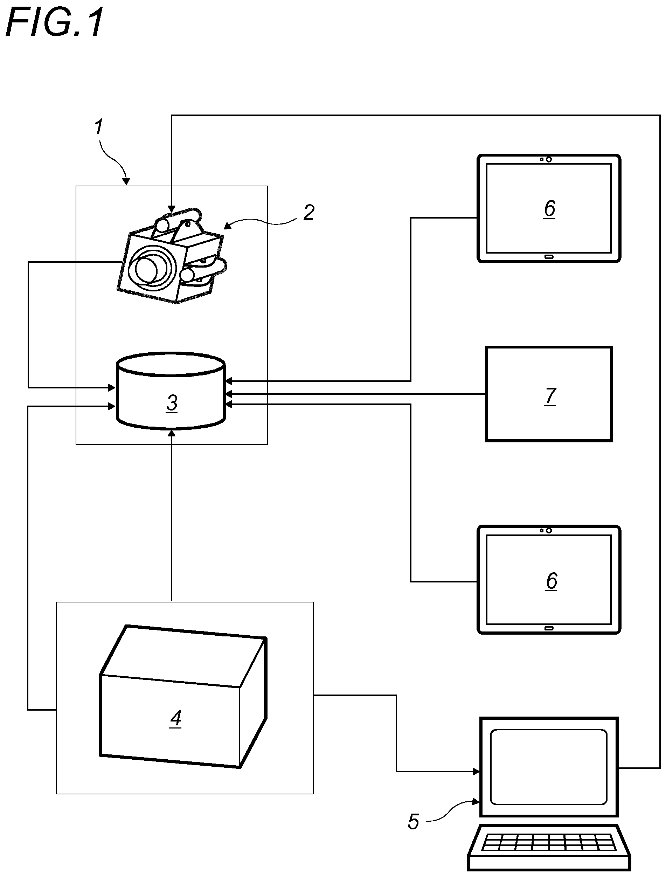

La figure 1 est une représentation schématique illustrant un exemple de réalisation d'un système de contrôle conforme à l'invention, lequel permet de contrôler un cordon de matière déposé sur une pièce industrielle, de manière à vérifier l'acceptabilité de paramètres dimensionnels, de paramètres de forme ou d'esthétique et/ou de paramètres de positionnement.

Le système de contrôle comprend au moins une machine de vision 1 comprenant une tête de vision 2 dans laquelle sont chargés des logiciels et des algorithmes d'analyse, de traitement et de pilotage ainsi qu'une base de données spécifique 3 permettant de stocker les résultats, notamment des images et des valeurs de paramètres mesurés ou calculés.

La tête de vision 2 fonctionne par exemple avec le système d'exploitation Linux Ubuntu sur une carte NVIDIA Jetson TX1, avantageusement dédiée pour le calcul sur imagerie.

La base de données spécifique 3 est avantageusement une banque Mysql.

Le système de contrôle comprend également un système de manutention pour permettre un mouvement relatif entre la tête de vision 2 et la pièce. Le système de contrôle comprend également une unité de commande 4 pour piloter le système de manutention et générer des données relatives au mouvement relatif entre la tête de vision 2 et la pièce portant le cordon de matières.

Le système de contrôle comprend également un ordinateur de configuration 5 pour effectuer la configuration de la tête de vision 2 et ce à partir des données se rapportant au mouvement relatif. Ces données se rapportant au mouvement relatif sont transmises par l'unité de commande 4 à l'ordinateur de configuration 5.

L'ordinateur de configuration 5 rempli plusieurs fonctions, à savoir :
- configurer la tête de vision 2,
- piloter un robot,
- piloter la tête de vision 2,
- sauvegarder les configurations des différents véhicules ou pièces,
- visualiser les résultats correspondant à chaque véhicule ou pièce.

Le système de contrôle comprend avantageusement au moins un outil d'affichage 6 du genre tablette tactile, relié à la banque de données spécifique 3. L'outil d'affichage 6 permet d'une part de visualiser le déroulement des opérations de contrôle et d'autre part d'afficher les images du cordon de matière prélevées par la tête de vision 2, notamment en identifiant d'éventuels défauts sur lesdites images.

Le système de contrôle peut être connecté à une banque de données complémentaire, du genre serveur à distance ou autre serveur de données. Ce dernier peut alors récupérer les données d'analyse de chaque voiture pour effectuer une analyse préventive des dérives et des corrections à mener.

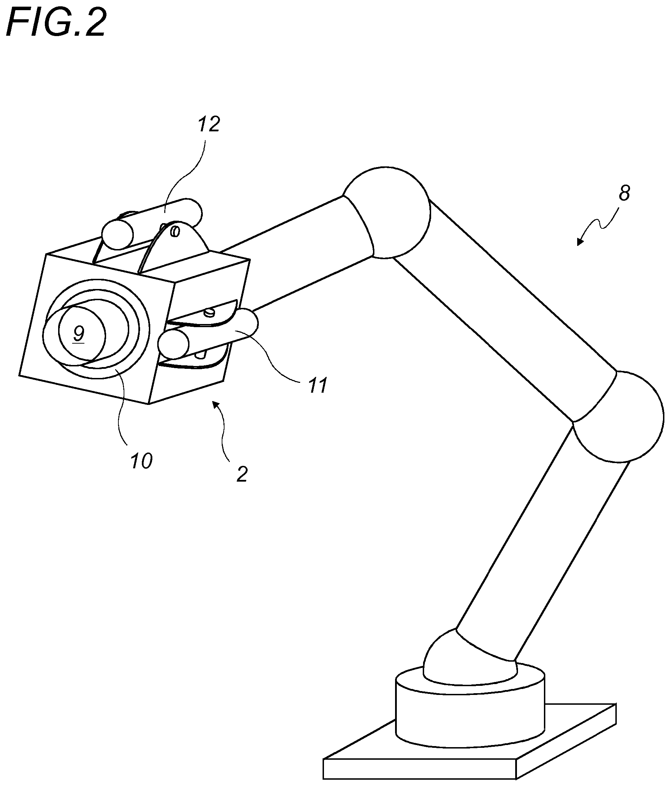

La figure 2 est une illustration d'un exemple de réalisation d'un système de manutention comportant la machine de vision 1 du système de contrôle. Dans cet exemple de réalisation le système de manutention comprend un bras robotisé 8 portant la tête de vision 2. Le bras robotisé 8 est relié, par tous moyens connus, à l'unité de commande 4.

Selon un autre exemple de réalisation le système de manutention comprend une nacelle mobile, sur laquelle est fixée la pièce portant le cordon de matières dans ce cas, l'unité de commande 4 pilote les déplacements de la nacelle de manière à faire défiler le cordon de matières devant la tête de vision 2.

La tête de vision 2 comprend une caméra numérique 9 ainsi qu'un éclairage annulaire 10 du genre EFFI-RING, localisé autour de ladite caméra numérique 9.

La tête de vision 2 comprend également deux projecteurs 11 et 12 disposés à la périphérie de l'éclairage annulaire 10 et présentant un écart angulaire de 90° l'un par rapport à l'autre. Les projecteurs 11 et 12 sont avantageusement des projecteurs à LED structurés EFFI-LASE, permettant de projeter des lignes et montés à angle droit l'un par rapport à l'autre sur la tête de vision 2. Ces projecteurs 11 et 12 sont orientés automatiquement par l'intermédiaire d'algorithmes spécifiques. Ces projecteurs 11 et 12 permettent ainsi d'effectuer le calcul de la hauteur des cordons déposés.

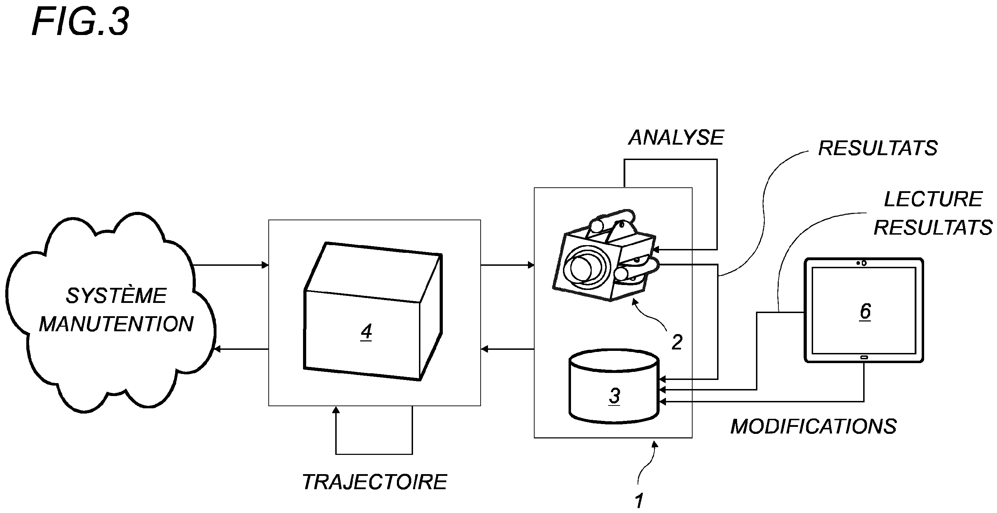

La figure 3 est une représentation schématique d'un exemple de mise en œuvre du procédé conforme à l'invention. L'unité de commande 4 permet de définir la trajectoire de la tête de vision 2. Cette trajectoire correspond à la trajectoire de pose du cordon de matière et les instructions correspondantes sont donc transmises au système de manutention.

La machine de vision 1 permet ainsi d'acquérir des images du cordon de matière déposé sur la pièce et de les stocker après analyse à l'aide d'algorithmes adéquats dans la banque de données spécifique 3. L'outil d'affichage 6 permet alors de lire et d'afficher les résultats provenant de la tête de vision 2 et stockés dans la banque de données spécifique 3. L'opérateur peut également par l'intermédiaire de l'outil d'affichage 6, modifier les résultats stockés dans la banque de données spécifique 3.

Le système de contrôle permet ainsi de mettre en œuvre le procédé de contrôle décrit plus en détail ci-après. Le procédé de contrôle de paramètres physiques se rapportant à au moins un cordon de matière déposé sur une pièce industrielle, comprend un certain nombre d'étapes énumérées ci-après.

Le cordon est par exemple non lissé ou lissé à l'aide d'une opération de lissage manuelle, semi-automatisée ou automatisée.

Le procédé de contrôle de paramètres physiques se rapportant à au moins un cordon de matière déposé sur une pièce industrielle, ledit cordon étant destiné à recouvrir une jointure, comprend un ensemble d'étapes détaillées ci-après.

Une étape a) consiste à définir les paramètres physiques à contrôler pour déceler des défauts du cordon, à savoir un défaut d'étanchéité du cordon, un défaut dimensionnel du cordon ou un défaut de forme du cordon.

Une étape b) consiste à choisir au moins un repère fixe, appelés également « top », sur la pièce pour définir la localisation idéale du cordon sur la pièce par rapport au(x) repère(s) fixe(s).

Une étape c) consiste à utiliser un dispositif de mouvement pour générer un déplacement relatif entre d'une part la pièce sur laquelle est déposé le cordon et d'autre part au moins une machine de vision.

Une étape d) consiste à utiliser la machine de vision pour éclairer le cordon, lire et enregistrer une succession d'images du cordon.

Une étape e) consiste à utiliser un ordinateur de configuration sur lequel fonctionne au moins un programme de configuration pour paramétrer la machine de vision et le dispositif de mouvement.

Une étape f) consiste à utiliser une base de données spécifique à la machine de vision pour enregistrer des données issues de la tête de vision ou fournies à la tête de vision.

Une étape g) consiste à utiliser un outil d'affichage du genre tablette reliée à la base de données spécifique par l'intermédiaire d'un système de communication et permettant à un opérateur de suivre le déroulement des opérations de contrôle, quasi en temps réel ou en différé.

Une étape h) consiste à comparer les images lues et enregistrées du cordon à des images idéales en utilisant des algorithmes chargés dans la machine de vision pour déceler les défauts du cordon.

Une étape i) consiste à identifier et afficher les défauts du cordon sur l'outil d'affichage et valider ou non lesdits défauts.

Une étape j) consiste à transmettre les défauts décelés, validés ou non validés à la base de données spécifique.

Selon un exemple de mise en œuvre, le procédé de contrôle consiste à initier des instructions d'actions correctives concernant la pose du cordon et/ou concernant le pilotage du déplacement relatif entre la pièce et la machine de vision.

Selon un exemple de mise en œuvre, le procédé consiste à disposer la pièce comportant le cordon sur un support mobile du genre balancelle, dont le déplacement est piloté automatiquement pour faire défiler ledit cordon devant la machine de vision fixe.

Selon un autre exemple de mise en œuvre, le procédé de contrôle consiste à maintenir la pièce comportant le cordon dans une position fixe et à disposer la machine de vision sur la tête d'un bras robotisé 8 dont le déplacement est piloté automatiquement pour faire défiler ledit cordon devant la machine de vision.

Selon un exemple de mise en œuvre, le procédé consiste à utiliser l'ordinateur de configuration 5 pour définir pour chaque image du cordon, une image se rapportant à un cordon idéal et générer des paramètres correctifs adéquats de recalage d'image.

Selon un exemple de mise en œuvre, le procédé consiste à recaler l'image prise en dynamique par rapport à une image référentielle pour pouvoir analyser la jointure masquée par le cordon et détecter d'éventuels défauts de positionnement dudit cordon par rapport à ladite jointure.

Cette image référentielle est enregistrée dans la base de données spécifique 3, sous forme de données de référence, ladite image référentielle étant construite à partir d'un mode d'apprentissage.

Par ailleurs, le procédé de contrôle permet également grâce à un apprentissage continu, par exemple pour une série de pièces théoriquement identiques, de compenser des dérives dimensionnelles des pièces et des dérives dans le déplacement relatif entre les pièces et la machine de vision.

Selon un exemple de mise en œuvre, le procédé consiste à définir pour le cordon des segments de contrôle, dont chacun est délimité selon son extension longitudinale par deux points d'extrémités, lesdits points d'extrémités étant localisés par rapport à au moins un repère fixe de la pièce. Les segments sont contrôlés les uns après les autres avec la machine de vision ou simultanément avec plusieurs machines de vision.

Selon un exemple de mise en œuvre, le procédé de consiste à choisir parmi les paramètres à contrôler, des paramètres de contrôle spécifiques pour chaque segment de cordon.

Selon un exemple de mise en œuvre, le procédé de contrôle consiste à visualiser sur l'outil d'affichage 6, les images du cordon déposé sur la pièce ainsi qu'une matérialisation de la position idéale dudit cordon sur chaque image.

Selon un exemple de mise en œuvre, le procédé de contrôle consiste à utiliser un programme pour d'échange d'informations entre la tête de vision 2 et le bras robotisé 8 et/ou entre la tête de vision et l'ordinateur de configuration 5.

Il convient d'utiliser au moins un repère fixe par zone à contrôler. Ainsi, un assemblage ou ferrage de deus pièces comportera deux zones et nécessitera d'utiliser au moins deux repères fixes 1b, à savoir un sur chaque zone. Un nombre plus grand de repères fixes favorisera la précision du contrôle.

Selon l'invention, le procédé de contrôle consiste à déterminer le ou les repères fixes, à déterminer un décalage de la pièce par rapport à une image antérieure de référence en estimant le déplacement des repères fixes par rapport aux repères fixes sur l'image antérieure de référence et repositionner la tracé optimal de la jointure à recouvrir sur la pièce à contrôler.

Selon un exemple de mise en œuvre, le procédé de contrôle consiste à estimer le décalage de la pièce par calcul, en utilisant un algorithme de recalage par triangulation ou un algorithme de recalage par calcul optimal.

Le procédé de contrôle permet ainsi de recaler, par calcul, la position réelle de la jointure sur une image du cordon déposé.

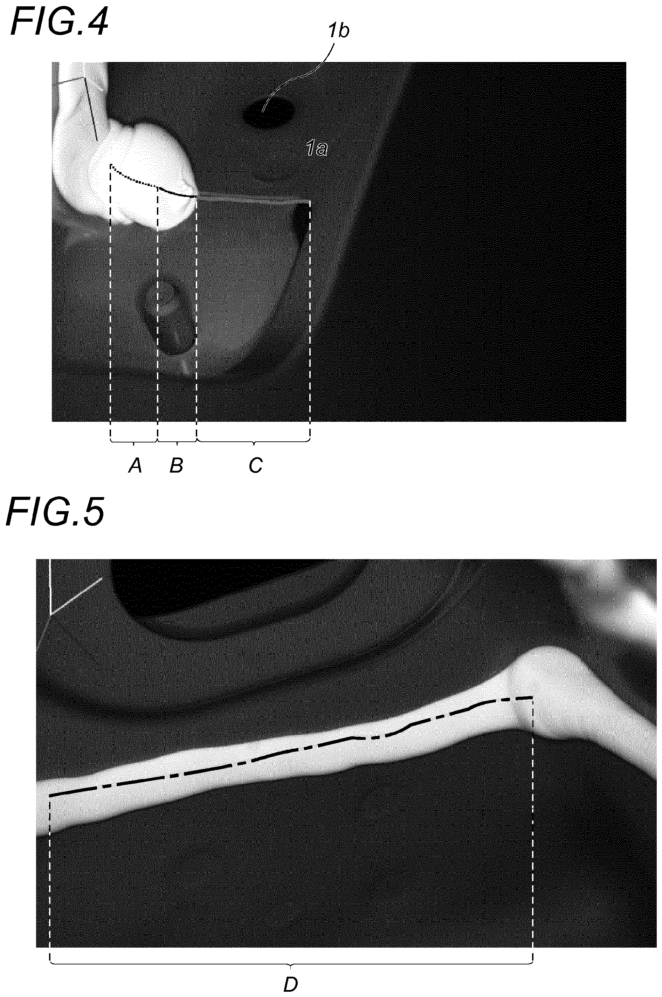

Les figures 4 à 6 sont des exemples d'images générées par le système de contrôle conforme à l'invention,

Le procédé de contrôle conforme à l'invention permet ainsi de visualiser sur l'outil d'affichage 6 des images du cordon de matières déposées sur la pièce 1a. La machine de vision 1, grâce à la tête de vision 2, permet d'une part de restituer une image du cordon en visualisant comme cela est représenté par exemple à la figure 4 une portion A identifiant la position de la jointure où doit être déposé le cordon. L'image que l'on obtient par l'intermédiaire du procédé de contrôle permet également d'afficher une portion B laquelle indique une largeur trop grande. Le cordon devrait donc être lissé à cet endroit.

L'image permet également d'identifier une portion C correspondant à une absence de cordon à savoir un défaut manifeste qu'il convient de déceler, d'analyser et de traiter. Avantageusement la portion C est une ligne de couleur différente s'étendant suivant la jointure. La pièce 1a illustré à la figure 4 présente également des trous 1b, utilisés comme des repères fixes 1b géométriques, pour le système de contrôle.

La figure 5 illustre par exemple un cordon présentant un défaut d'épaisseur ou de diamètre sur une section D. La jointure est identifiée par exemple par une couleur différente de celle se rapportant à une absence de cordon. (cf figure 4). La portion présentant ainsi un défaut de dimension est repérée par la référence D à la figure 5.

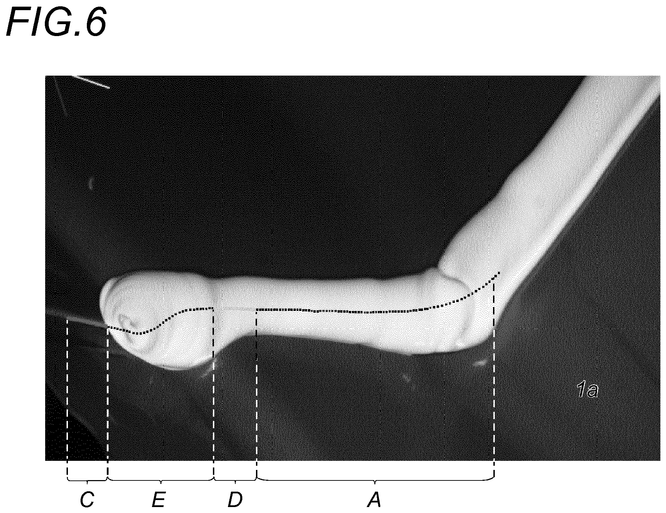

Dans l'exemple illustré à la figure 6 l'image illustrant le cordon déposé sur la pièce 1a permet ainsi facilement à l'opérateur d'identifier la position de la jointure dans une zone A où ladite jointure est correctement recouverte par le cordon de matière. Ce dernier présente également une portion D présentant un défaut d'esthétique, une portion E présentant une zone trop large ainsi qu'une portion C dépourvue de cordon et résultant d'un défaut de lissage.

L'invention concerne également un produit programme d'ordinateur comprenant des instructions de code de programme, enregistrées sur un support lisible par ordinateur pour mettre en œuvre les étapes du procédé de contrôle conforme à l'invention, lorsque ledit programme fonctionne sur un ordinateur.

A titre d'exemple, la tête de vision 2 comporte plusieurs programmes écrits en C++.

Un premier programme permet de piloter la caméra numérique 9 et les éclairages 10, 11, 12 et récupère les images sur des tops précis correspondant à des points de référence sur le véhicule ou sur la pièce 1a pour fournir les images des segments de cordon.

Un autre programme permet à partir des images :
- de calculer le recalage des images à l'aide d'un algorithme de recalage,
- de détecter la présence de matière (par exemple du mastic) à l'aide d'un algorithme de détection de matière, de centrage et de largeur,
- de mesurer la hauteur du cordon à l'aide d'un algorithme de relief.

De manière évidente, l'invention ne se limite pas au mode de réalisation préférentiel décrit précédemment et représenté sur les différentes figures, l'homme du métier pouvant y apporter de nombreuses modifications et imaginer d'autres variantes. Ainsi, une caractéristique technique décrite peut être remplacée par une caractéristique technique équivalente ou une étape de mise en œuvre peut être remplacée par une étape équivalente, sans sortir ni de la portée, ni du cadre de l'invention définis par les revendications.

## Revendications

1. Procédé de contrôle de paramètres physiques se rapportant à au moins un cordon de matière déposé sur une pièce industrielle (1a) et destiné à recouvrir une jointure (1c), ledit procédé comprenant les étapes suivantes :
a) définir les paramètres physiques à contrôler pour déceler un ou plusieurs défauts du cordon de matière, à savoir, un défaut d'étanchéité, un défaut dimensionnel ou un défaut de forme,
b) choisir un ou plusieurs repères fixes (1b) sur la pièce (1a) pour définir une position idéale du cordon de matière par rapport à ces repères fixes (1b),
c) utiliser un système de manutention pour générer un déplacement relatif de la pièce (1a) et d'au moins une machine de vision comprenant une tête de vision (2),
d) utiliser la machine de vision pour éclairer le cordon de matière et lire et enregistrer une succession d'images du cordon de matière,
e) utiliser un ordinateur (5) sur lequel fonctionne au moins un programme de configuration pour paramétrer la machine de vision et le système de manutention,
f) utiliser une base de données spécifique (3) de la machine de vision pour y stocker des données issues de la tête de vision (2) ou fournies à cette tête de vision (2),
g) utiliser un outil d'affichage du genre tablette, relié à la base de données spécifique (3) par l'intermédiaire d'un système de communication, pour permettre à un opérateur de suivre le déroulement d'opérations de contrôle, quasi en temps réel ou en différé,
h) comparer les images acquises du cordon de matière à des images idéales en utilisant des algorithmes de la machine de vision pour y déceler les défauts du cordon de matière,
i) identifier et afficher ces défauts sur la tablette et les valider ou non,
j) transmettre ces défauts, validés ou non validés, à la base de données spécifique (3),
le procédé comprenant en outre de déterminer le ou les repères fixes, de déterminer un décalage de la pièce (1a) par rapport à une image antérieure de référence en estimant un déplacement des repères fixes (1b) par rapport aux repères fixes sur l'image antérieure de référence et de repositionner un tracé optimal de la jointure (1c) à recouvrir sur la pièce (1a) à contrôler.

2. Procédé selon la revendication 1, dans lequel on initie des instructions en vue d'une ou plusieurs actions correctives concernant la dépose du cordon de matière et/ou le déplacement relatif de la pièce (1a) et la machine de vision.

3. Procédé selon la revendication 1 ou 2, dans lequel on dispose la pièce (1a) comportant le cordon de matière sur un support mobile du genre balancelle et on pilote automatiquement un déplacement de cette balancelle de manière à faire défiler ledit cordon devant la tête de vision (2) de la machine de vision.

4. Procédé selon la revendication 1 ou 2, dans lequel on maintient la pièce (1a) comportant le cordon de matière dans une position fixe, on dispose la machine de vision sur un bras robotisé et on pilote automatiquement un déplacement de ce bras de manière à faire défiler le cordon de matière devant la tête de vision (2) de la machine de vision.

5. Procédé selon l'une des revendications 1 à 4, dans lequel on utilise l'ordinateur pour définir, pour chaque image acquise du cordon de matière, une image se rapportant à un cordon idéal et générer des paramètres correctifs.

6. Procédé selon la revendication 5, dans lequel, à l'étape b), on effectue un apprentissage continu, permettant de compenser des dérives dimensionnelles dans les pièces et des dérives dans le déplacement entre les pièces et la machine de vision.

7. Procédé selon la revendication 5 ou 6, dans lequel on utilise trois repères fixes (1b).

8. Procédé selon la revendication 7, dans lequel on estime le décalage de la pièce (1a) par calcul, en utilisant un algorithme de recalage par triangulation ou par calcul optimal.

9. Procédé selon l'une des revendications 1 à 8, dans lequel on définit des segments du cordon de matière, délimités chacun selon son extension longitudinale par deux points d'extrémité localisés par rapport à au moins un repère fixe de la pièce, et on contrôle les segments du cordon de matière les uns après les autres avec la machine de vision ou simultanément avec plusieurs machines de vision.

10. Procédé de contrôle selon la revendication 9, dans lequel, à l'étape a), on définit un ou plusieurs paramètres physiques spécifiques pour chaque segment du cordon de matière.

11. Procédé selon l'une des revendications précédentes, dans lequel on visualise sur la tablette des images du cordon de matière déposé sur la pièce (1a) ainsi qu'une matérialisation de la position idéale de ce cordon, sur chaque image.

12. Procédé selon l'une des revendications précédentes, mis en œuvre pour des pièces destinées à l'industrie automobile.

13. Procédé selon l'une des revendications précédentes, dans lequel on utilise un programme pour échanger des informations entre la tête de vision (2) de la machine de vision et un bras robotisé (8) et/ou entre cette tête de vision (2) et l'ordinateur (5).

14. Système de contrôle pour mettre en œuvre le procédé conforme à l'une des revendications précédentes, le système comprenant :
au moins une machine de vision comprenant une tête de vision (2) et une base de données spécifique (3),
un système de manutention pour générer un déplacement relatif de la tête de vision et une pièce industrielle,
une unité de commande pour piloter le système de manutention et générer des données relatives au déplacement relatif,
un ordinateur (5) pour configurer la tête de vision (2) de la machine de vision à partir des données relatives au déplacement transmises par l'unité de commande,
au moins un outil d'affichage du genre tablette, relié à la base de données spécifique, pour visualiser un déroulement d'opérations de contrôle, et
un ou plusieurs programmes agencés pour mettre en œuvre le procédé.

15. Système selon la revendication 14, comprenant en outre une banque de données complémentaire, du genre serveur à distance.

16. Système selon la revendication 14 ou 15, dans lequel la tête de vision (2) de la machine de vision comprend une caméra numérique, un éclairage annulaire localisé autour de cette caméra et deux projecteurs (11, 12) disposés en périphérie de l'éclairage annulaire selon un écart angulaire de 90°.

17. Système selon l'une des revendications 14 à 16, dans lequel le système de manutention comprend un bras robotisé (8) portant la tête de vision (2) de la machine de vision.

18. Système selon l'une des revendications 14 à 17, dans lequel le système de manutention comprend une nacelle mobile sur laquelle on peut fixer la pièce (1a) portant le cordon de matière.

19. Produit de programme d'ordinateur comprenant des instructions de code de programme enregistrées sur un support lisible par ordinateur pour mettre en œuvre les étapes du procédé de contrôle selon l'une des revendications 1 à 14, lorsque ledit programme est exécuté par un ordinateur.

## Patentansprüche

1. Verfahren zum Überprüfen physikalischer Parameter, die sich auf mindestens einen auf ein industrielles Teil (1a) aufgetragenen Materialstrang beziehen, der dazu bestimmt ist, eine Verbindungsstelle (1c) abzudecken, wobei das Verfahren die folgenden Schritte umfasst:
a) Definieren der physikalischen Parameter, die überprüft werden müssen, um einen oder mehrere Fehler des Materialstrangs zu erkennen, d. h. einen Dichtheitsfehler, einen Abmessungsfehler oder einen Formfehler,
b) Auswählen einer oder mehrerer fester Markierungen (1b) auf dem Teil (1a), um eine ideale Position des Materialstrangs in Bezug auf diese festen Markierungen (1b) zu definieren,
c) Verwenden eines Handhabungssystems, um eine relative Bewegung des Teils (1a) und mindestens einer Bildverarbeitungsmaschine, die einen Bildverarbeitungskopf (2) umfasst, zu erzeugen,
d) Verwenden der Bildverarbeitungsmaschine, um den Materialstrang zu beleuchten und eine Abfolge von Bildern des Materialstrangs zu lesen und zu speichern,
e) Verwenden eines Computers (5), auf dem mindestens ein Konfigurationsprogramm läuft, um die Bildverarbeitungsmaschine und das Handhabungssystem zu parametrieren,
f) Verwenden einer spezifischen Datenbank (3) der Bildverarbeitungsmaschine, um dort Daten zu speichern, die vom Bildverarbeitungskopf (2) stammen oder an diesen Bildverarbeitungskopf (2) bereitgestellt werden,
g) Verwenden eines Anzeigegeräts vom Typ Tablet, das über ein Kommunikationssystem mit der spezifischen Datenbank (3) verbunden ist, um es einem Bediener zu ermöglichen, den Ablauf von Überprüfungsvorgängen nahezu in Echtzeit oder zeitverzögert zu verfolgen,
h) Vergleichen der erfassten Bilder des Materialstrangs mit Idealbildern unter Verwendung von Algorithmen der Bildverarbeitungsmaschine, um dort die Fehler des Materialstrangs zu erkennen,
i) Identifizieren und Anzeigen dieser Fehler auf dem Tablet und diese Bestätigen oder nicht,
j) Übermitteln dieser Fehler, egal, ob bestätigt oder nicht bestätigt, an die spezifische Datenbank (3),
wobei das Verfahren ferner das Bestimmen der festen Markierung (en), das Bestimmen einer Verschiebung des Teils (1a) in Bezug auf ein vorangegangenes Referenzbild durch Schätzen einer Bewegung der festen Markierungen (1b) in Bezug auf die festen Markierungen auf dem vorangegangenen Referenzbild und das Neupositionieren eines optimalen Verlaufs der abzudeckenden Verbindungsstelle (1c) auf dem zu überprüfenden Teil (1a) umfasst.

2. Verfahren nach Anspruch 1, wobei Anweisungen für eine oder mehrere Korrekturmaßnahmen bezüglich des Aufbringens des Materialstrangs und/oder der relativen Bewegung des Teils (1a) und der Bildverarbeitungsmaschine eingeleitet werden.

3. Verfahren nach Anspruch 1 oder 2, wobei das Teil (1a), das den Materialstrang umfasst, auf einem beweglichen Träger vom Typ Schaukel angeordnet wird und eine Bewegung dieser Schaukel automatisch so gesteuert wird, dass der Strang vor dem Bildverarbeitungskopf (2) der Bildverarbeitungsmaschine vorbeiläuft.

4. Verfahren nach Anspruch 1 oder 2, wobei das Teil (1a), das den Materialstrang umfasst, in einer festen Position gehalten wird, die Bildverarbeitungsmaschine auf einem Roboterarm angeordnet ist und eine Bewegung dieses Arms automatisch so gesteuert wird, dass der Materialstrang vor dem Bildverarbeitungskopf (2) der Bildverarbeitungsmaschine vorbeiläuft.

5. Verfahren nach einem der Ansprüche 1 bis 4, wobei der Computer verwendet wird, um für jedes erfasste Bild des Materialstrangs ein Bild zu definieren, das sich auf einen idealen Strang bezieht, und Korrekturparameter zu erzeugen.

6. Verfahren nach Anspruch 5, wobei in Schritt b) ein kontinuierliches Lernen durchgeführt wird, das es ermöglicht, Abmessungsabweichungen bei den Teilen und Abweichungen in der Bewegung zwischen den Teilen und der Bildverarbeitungsmaschine auszugleichen.

7. Verfahren nach Anspruch 5 oder 6, wobei drei feste Markierungen (1b) verwendet werden.

8. Verfahren nach Anspruch 7, wobei die Verschiebung des Teils (1a) durch Berechnung unter Verwendung eines Algorithmus zur Neueinstellung durch Triangulation oder durch optimale Berechnung geschätzt wird.

9. Verfahren nach einem der Ansprüche 1 bis 8, wobei Segmente des Materialstrangs definiert werden, die jeweils entlang ihrer Längsausdehnung durch zwei Endpunkte begrenzt sind, die in Bezug auf mindestens eine feste Markierung des Teils abgeordnet sind, und die Segmente des Materialstrangs nacheinander mit der Bildverarbeitungsmaschine oder gleichzeitig mit mehreren Bildverarbeitungsmaschinen überprüft werden.

10. Prüfverfahren nach Anspruch 9, wobei in Schritt a) ein oder mehrere spezifische physikalische Parameter für jedes Segment des Materialstrangs definiert werden.

11. Verfahren nach einem der vorhergehenden Ansprüche, wobei auf dem Tablett Bilder des auf dem Teil (1a) aufgebrachten Materialstrangs sowie eine Materialisierung der idealen Position dieses Strangs auf jedem Bild angezeigt werden.

12. Verfahren nach einem der vorhergehenden Ansprüche, das für Teile für die Automobilindustrie eingesetzt wird.

13. Verfahren nach einem der vorhergehenden Ansprüche, wobei ein Programm zum Austausch von Informationen zwischen dem Bildverarbeitungskopf (2) der Bildverarbeitungsmaschine und einem Roboterarm (8) und/oder zwischen diesem Bildverarbeitungskopf (2) und dem Computer (5) verwendet wird.

14. Prüfsystem zum Umsetzen des Verfahrens nach einem der vorhergehenden Ansprüche, wobei das System Folgendes umfasst:
mindestens eine Bildverarbeitungsmaschine, die einen Bildverarbeitungskopf (2) und eine spezifische Datenbank (3) umfasst,
ein Handhabungssystem zum Erzeugen einer relativen Bewegung des Bildverarbeitungskopfs und eines industriellen Teils,
eine Steuereinheit zum Steuern des Handhabungssystems und zum Erzeugen von Daten über die relative Bewegung,
einen Computer (5) zum Konfigurieren des Bildverarbeitungskopfs (2) der Bildverarbeitungsmaschine anhand der von der Steuereinheit übermittelten Bewegungsdaten,
mindestens ein Anzeigegeräte vom Typ Tablet, das mit der spezifischen Datenbank verbunden ist, um einen Ablauf von Überprüfungsvorgängen anzuzeigen, und
ein oder mehrere Programme, die zum Durchführen des Verfahrens eingerichtet sind.

15. System nach Anspruch 14, ferner umfassend eine ergänzende Datenbank vom Typ Fernserver.

16. System nach Anspruch 14 oder 15, wobei der Bildverarbeitungskopf (2) der Bildverarbeitungsmaschine eine digitale Kamera, eine um diese Kamera angeordnete Ringbeleuchtung und zwei Projektoren (11, 12) umfasst, die am Umfang der Ringbeleuchtung in einem Winkelabstand von 90° angeordnet sind.

17. System nach einem der Ansprüche 14 bis 16, wobei das Handhabungssystem einen Roboterarm (8) umfasst, der den Bildverarbeitungskopf (2) der Bildverarbeitungsmaschine trägt.

18. System nach einem der Ansprüche 14 bis 17, wobei das Handhabungssystem einen beweglichen Aufsatz umfasst, an dem das Teil (1a), das den Materialstrang trägt, befestigt werden kann.

19. Computerprogrammprodukt, das Programmcodeanweisungen umfasst, die auf einem computerlesbaren Medium gespeichert sind, um die Schritte des Prüfverfahrens nach einem der Ansprüche 1 bis 14 durchzuführen, wenn das Programm auf einem Computer ausgeführt wird.

## Claims

1. Method for checking physical parameters relating to at least one bead of material deposited on an industrial part (1a) and intended to cover a joint (1c), said method comprising the following steps:
a) defining the physical parameters to be checked to detect one or more defects of the bead of material, i.e., a sealing defect, a dimensional defect or a shape defect,
b) selecting one or more fixed reference points (1b) on the part (1a) to define an ideal position of the bead of material with respect to these fixed reference points (1b),
c) using a handling system to generate a relative movement of the part (1a) and of at least one vision machine comprising a vision head (2),
d) using the vision machine to illuminate the bead of material and reading and recording a sequence of images of the bead of material,
e) using a computer (5) on which at least one configuration program runs to configure the vision machine and the handling system,
f) using a specific database (3) of the vision machine to store therein data from the vision head (2) or provided to this vision head (2),
g) using a display tool of the tablet type, connected to the specific database (3) via a communication system, to allow an operator to follow the progress of checking operations, almost in real time or in delayed mode,
h) comparing the acquired images of the bead of material with ideal images using algorithms of the vision machine to detect defects of the bead of material therein,
i) identifying and displaying these faults on the tablet and validating them or not,
j) transmitting these defects, validated or not validated, to the specific database (3),
the method further comprising determining the fixed reference point(s), determining a shift of the part (1a) relative to a previous reference image by estimating a movement of the fixed reference points (1b) relative to the fixed reference points on the previous reference image and repositioning an optimal trace of the joint (1c) to be covered on the part (1a) to be checked.

2. Method according to claim 1, wherein instructions are initiated with a view to one or more corrective actions concerning the depositing of the bead of material and/or the relative movement of the part (1a) and the vision machine.

3. Method according to claim 1 or 2, wherein the part (1a) including the bead of material is disposed on a movable support of the cradle type and a movement of this cradle is automatically controlled so as to run said bead in front of the vision head (2) of the vision machine.

4. Method according to claim 1 or 2, wherein the part (1a) including the bead of material is held in a fixed position, the vision machine is arranged on a robotic arm and a movement of this arm is automatically controlled so as to run the bead of material in front of the vision head (2) of the vision machine.

5. Method according to one of claims 1 to 4, wherein the computer is used to define, for each acquired image of the bead of material, an image relating to an ideal bead and to generate corrective parameters.

6. Method according to claim 5, wherein, in step b), continuous learning is performed, making it possible to compensate for dimensional drifts in the parts and drifts in the movement between the parts and the vision machine.

7. Method according to claim 5 or 6, wherein three fixed reference points (1b) are used.

8. Method according to claim 7, wherein the offset of the part (1a) is estimated by calculation, using a triangulation or optimal calculation registration algorithm.

9. Method according to one of claims 1 to 8, wherein segments of the bead of material are defined, each delimited according to its longitudinal extension by two end points located with respect to at least one fixed reference point of the part, and the segments of the bead of material are checked one after the other with the vision machine or simultaneously with several vision machines.

10. Checking method according to claim 9, wherein, in step a), one or more specific physical parameters are defined for each segment of the bead of material.

11. Method according to one of the preceding claims, wherein images of the bead of material deposited on the part (1a) are visualised on the tablet as well as a representation of the ideal position of this bead, are viewed on each image.

12. Method according to one of the preceding claims, implemented for parts intended for the automotive industry.

13. Method according to one of the preceding claims, wherein a program is used to exchange information between the vision head (2) of the vision machine and a robotic arm (8) and/or between this vision head (2) and the computer (5).

14. Checking system for implementing the method according to any one of the preceding claims, the system comprising:
at least one vision machine comprising a vision head (2) and a specific database (3),
a handling system for generating a relative movement of the vision head and an industrial part,
a control unit for controlling the handling system and generating data relating to the relative movement,
a computer (5) for configuring the vision head (2) of the vision machine based on the movement-related data transmitted by the control unit,
at least one display tool of the tablet type, connected to the specific database, to view a sequence of checking operations, and
one or more programs arranged to implement the method.

15. System according to claim 14, further comprising a complementary database, of the remote server type.

16. System according to claim 14 or 15, wherein the vision head (2) of the vision machine comprises a digital camera, annular illumination located around this camera and two projectors (11, 12) arranged at the periphery of the annular illumination at an angular distance of 90°.

17. System according to any one of claims 14 to 16, wherein the handling system comprises a robotic arm (8) carrying the vision head (2) of the vision machine.

18. System according to any one of claims 14 to 17, wherein the handling system comprises a movable nacelle on which the part (1a) carrying the bead of material can be secured.

19. Computer program product comprising program code instructions recorded on a computer-readable medium for implementing the steps of the checking method according to any one of claims 1 to 14, when said program is executed by a computer.
